# EUROPÄISCHE PATENTSCHRIFT

(11) **EP 0 271 748 B1**
(45) Veröffentlichungstag und Bekanntmachung des Hinweises auf die Patenterteilung: **06.10.1993**
(21) Anmeldenummer: 87117371.2
(22) Anmeldetag: 25.11.1987
(51) Int. Cl.: H04N 7/167, H04N 5/91

(54) **System zur Verarbeitung verschlüsselt übertragener Informationen**
System for processing scrambled transmission information
Système de traitement d'informations transmises en forme brouillée

(30) Priorität: 13.12.1986 DE 3642629
(43) Veröffentlichungstag der Anmeldung: 22.06.1988
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Hegendörfer, Max, Dipl.-Ing. GRUNDIG E.M.V., D-8510 Fürth/Bay (DE)

(56) Entgegenhaltungen:
- WO-A-88/06826
- US-A- 4 058 830
- US-A- 4 464 678

## Beschreibung

Die Erfindung betrifft ein System zur Verarbeitung verschlüsselt übertragener Informationen mit den im Oberbegriff des Anspruch 1 angegebenen Merkmalen.

Aus der US-A-4 464 678 ist ein Scrambling-System bekannt, bei dem senderseitig unter Verwendung eines Verschlüsselungs-Sequenz-Generators das Verschlüsselungsmuster sich stündlich ändert. Zur empfangsseitigen Entschlüsselung ist es notwendig, daß der Kunde mittels der Bedieneinheit des Entschlüsslers ein Schlüsselsignal eingibt, welches er durch telefonische Rückfrage beim Programmanbieter einmal pro Monat erfragen muß. Dieses Schlüsselsignal wird in Verbindung mit einer für jeden Kunden spezifischen laufenden Nummer und der Information von einem Stundenzähler zur Ermittlung eines Startwortes verwendet, welches wiederum zur Anpassung des Entschlüsselungsmusters an das senderseitig verwendete Verschlüsselungsmuster benötigt wird.

Die US-A-4 058 830 betrifft ein gebührenpflichtiges Datenübertragungssystem, bei welchem vom Sender zum Empfänger neben einer Kanal-Kenninformation auch eine Zeitintervall-Information (z.B. jetzige Woche) übertragen wird. Ein Kunde, der die genannten Daten empfangen will, muß an einer Kartenverkaufsstelle (Automat, Post, ...) beispielsweise eine Magnetkarte kaufen, die ebenfalls die obengenannte Kanal-Kenninformation und die obengenannte Zeitintervall-Information enthält. Beim Empfang erfolgt ein Vergleich der gesendeten Zeitintervall-Information mit der auf der Magnetkarte abgespeicherten Zeitintervall-Information und der gesendeten Kanal-Kenninformation mit der auf der Magnetkarte abgespeicherten Kanal-Kenninformation. Liefern die beiden genannten Vergleiche ein positives Ergebnis, dann können die gewünschten Daten empfangen werden.

Ein System mit den im Oberbegriff des Anspruchs 1 angegebenen Merkmalen ist im wesentlichen aus der US-Patentschrift 4 325 078 bekannt. Diese beschreibt ein sog. "Pay Per View"-Fernsehsystem, bei dem nur ein entsprechend ausgestatteter Empfänger die übertragenen Sendungen decodieren kann, so daß sie auf dem Bildschirm decodiert betrachtet werden können. Der bekannte Empfänger weist einen Konverter zur Umsetzung des übertragenen Signals in eine für die nachfolgenden Empfängerbauteile geeignete Form auf. Dieser Konverter wird nur dann aktiviert, wenn die in einem empfängereigenen Referenzsignalgenerator 30 erzeugte Echtzeit innerhalb eines vorgebbaren Zeitintervalls liegt. Die dieses vorgebbare Zeitintervall festlegende Information ist in geeigneter Form auf einer Magnetkarte oder einem Magnetband aufgezeichnet, welche(s) dem Benutzer vom Programmanbieter gegen Zahlung einer Gebühr zur Verfügung gestellt wird. Die Magnetkarte bzw. das Magnetband wird in eine am Empfänger vorgesehene öffnung gebracht. Die auf der Magnetkarte (dem Magnetband) aufgezeichneten Signale, die neben dem bereits genannten vorgebbaren Zeitintervall auch Informationen zur Benutzeridentifikation und zur maximal erlaubten Decodierzeit enthalten, werden von einem Magnetkopf gelesen und im Sinne einer Berechtigungskontrolle ausgewertet.

Das bekannte System weist jedoch Nachteile auf. Zum einem ist das Anfertigen und Austauschen der Magnetkarte bzw. des Magnetbandes umständlich und zeitaufwendig. Weiterhin können mittels der bekannten Einrichtung Sendungen, die auf dem Bildschirm betrachtet werden können, auch in decodierter Form aufgezeichnet und überspielt bzw. kopiert werden, so daß Kopien der decodierten Sendung beliebig lange archiviert und beliebig oft betrachtet werden können. Mittels der bekannten Einrichtung ist es folglich nur möglich, die Decodierung empfangener Sendungen für Zuschauer ohne gültige Magnetkarte zu unterbinden. Zuschauer mit gültiger Magnetkarte können die Sendungen decodieren, kopieren und beliebig oft betrachten.

Demgegenüber besteht die Aufgabe der Erfindung darin, ein System der im Oberbegriff des Anspruchs 1 angegebenen Art derart auszugestalten, daß die oben beschriebenen Nachteile vermieden werden. Ferner soll ein System angegeben werden, mittels dessen für jede Sendung individuell entschieden werden kann, ob überhaupt, wann und wie lange eine verschlüsselt aufgezeichnete Sendung entschlüsselt wiedergegeben werden kann. So soll es mittels des beanspruchten Systems auch möglich sein, in einem vom Sender vorgebbaren beschränkten Zeitintervall, welches von der tatsächlichen Sendezeit der Sendung verschieden ist, eine Entschlüsselung der verschlüsselt aufgezeichneten Sendung zu gestatten und für alle anderen Zeitintervalle zu verbieten.

Diese Aufgabe wird durch die im Anspruch 1 angegebenen Merkmale gelöst. Vorteilhafte Ausgestaltungen der Erfindung ergeben sich aus den Unteransprüchen.

Die Vorteile der Erfindung bestehen insbesondere darin, daß beim beanspruchten System der empfängerseitige Entschlüssler von einem vom Sender herrührenden Signal in nahezu beliebiger Weise beeinflußt werden kann.

So kann es beispielsweise möglich sein, eine Entschlüsslung neu erschienener Spielfilme nur während ihrer Sendezeit zu erlauben. Diese Filme könnten zwar auch aufgezeichnet werden, allerdings nur in verschlüsselter Form. Eine zeitversetzte, entschlüsselte Wiedergabe dieser Filme ist nicht möglich.

Ferner ist es mittels der beanspruchten Einrichtung möglich, eine Entschlüsselung beispielsweise bereits vor einiger Zeit erschienener Spielfilme während ihrer Sendezeit zu ermöglichen und ferner zu gestatten, eventuell vorgenommene Aufzeichnungen innerhalb eines vom Sender bestimmbaren Zeitintervalles (z. B. 3 Tage) entschlüsselt wiederzugeben (im Sinne einer "Aufzeichnung mit Verfalldatum").

Schließlich kann es mittels des beanspruchten Systems gestattet werden, beispielsweise alte Spielfilme während ihrer Sendeeit zur entschlüsseln und auch eventuelle Kopien dieser Filme beliebig lange und oft entschlüsselt wiederzugeben.

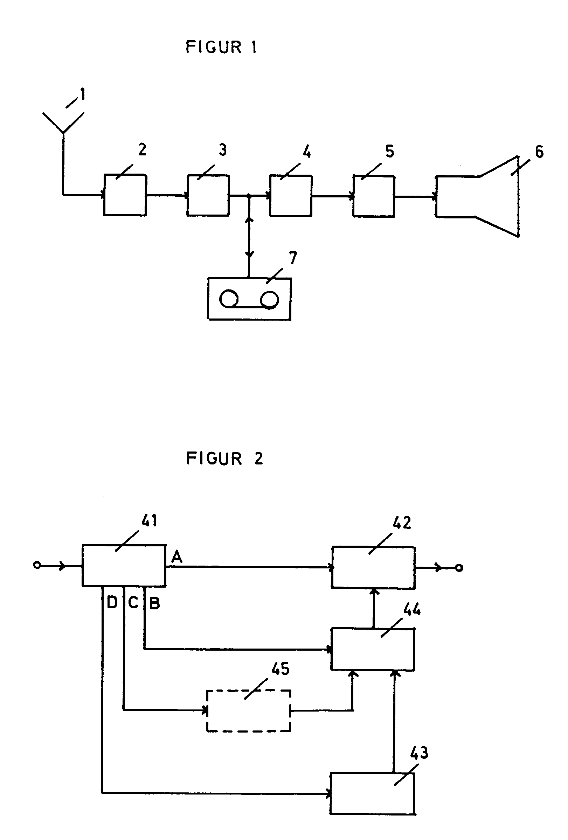

Weitere vorteilhafte Eigenschaften des beanspruchten Systems ergeben sich aus einem Ausführungsbeispiel, welches im folgenden anhand der Figuren 1 und 2 näher erläutert wird.

Die Figur 1 zeigt ein Blockschaltbild zur Erläuterung der grundsätzlichen Wirkungsweise des beanspruchten Systems. Die Figur 2 zeigt ein detaillierteres Blockschaltbild des Entschlüsslers 4 von Figur 1.

Nach Figur 1 wird mittels der Satelliten-Antenne 1 ein von einem (nicht gezeichneten) Satelliten-Sender ausgestrahltes, über eine Satelliten-Übertragungsstrecke übertragenes verschlüsseltes Satelliten-Fernsehsignal empfangen. Alternativ hierzu kann das empfangene Signal natürlich auch über eine Kabelstrecke übertragen werden.

Dieses verschlüsselte Satelliten-Fernsehsignal enthält neben einer in verschlüsselter Form vorliegenden Bildinformation und mindestens einer ggfs. ebenfalls in verschlüsselter Form vorliegenden Toninformation auch Informationen über die Echtzeit, die der Sendungszeit der momentan ausgestrahlten Sendung entspricht. Diese Echtzeitinformationen können entweder auch verschlüsselt sein oder in nicht verschlüsselter Form vorliegen. Ferner enthält das Satelliten-Fernsehsignal Informationen über ein vom Sender vorgegebenes Zeitintervall, innerhalb dessen der Entschlüssler 4 aktiviert werden kann. Weiterhin enthält das Satelliten-Fernsehsignal eine Information darüber, ob im Empfänger ein Zeitvergleich erfolgen soll oder nicht.

Dieses verschlüsselte Satelliten-Fernsehsignal wird einem ersten Umsetzer 2 (sog. "Outdoor-Unit") zugeführt und dort in eine 1. Zwischenfrequenzlage umgesetzt. Dieses Signal gelangt an die Einrichtung 3 des gezeigten Empfängers, die einen Tuner und einen zweiten Umsetzer enthält. Am Ausgang dieses zweiten Umsetzers liegt das verschlüsselte Satelliten-Fernsehsignal als FBAS- oder Basisbandsignal an. Dieses Signal kann mittels eines Aufzeichnungsgerätes 7 in verschlüsselter Form aufgezeichnet werden.

Weiterhin gelangt das Ausgangssignal des zweiten Umsetzers 3 an einen Entschlüssler 4, dessen Aufbau und Funktionsweise in folgenden anhand von Fig. 2 näher erläutert werden.

Dem Eingang des in Fig. 2 gezeigten Entschlüsslers wird das FBAS- oder Basisbandsignal zugeführt, welches u. a. die Bild- und Toninformation des Signals in verschlüsselter Form enthält. Dieses Signal kommt entweder von der Schaltung 3 oder vom Aufzeichnungsgerät 7 gemäß Figur 1.

Kommt das Signal von der Schaltung 3, so handelt es sich bei der übertragenen Zeitinformation um die Echtzeit, während der die Sendung erfolgt. Kommt das Signal hingegen vom Aufzeichnungsgerät 7, so handelt es sich bei der übertragenen Zeitinformation um die Echtzeit zur Zeit der Aufzeichnung und nicht um die Echtzeit der Wiedergabe.

Dieses Signal gelangt an eine Selektionsschaltung 41, in welcher diejenigen Anteile aus dem Satelliten-Signal abgetrennt werden, die für die Funktionsweise des Entschlüsslers von Bedeutung sind. So stehen am Ausgang A der Selektionsschaltung 41 die verschlüsselte Bild- und Toninformation an, am Ausgang B Informationen darüber, ob ein zeitvergleich zwischen der Zeit der Echtzeituhr 43 und der von der Quelle (Sender oder Aufzeichnungsgerät) gelieferten Zeit erfolgen soll oder nicht und innerhalb welches Zeitintervalles eine Aktivierung eines dritten Umsetzers 42 erlaubt ist, und am Ausgang C eine Information über die von der Quelle gelieferte Zeit in verschlüsselter oder nicht verschlüsselter Form.

Am Ausgang D kann ein Steuersignal zur Stellung und Aktualisierung der Echtzeituhr 43 zur Verfügung gestellt werden. Dieses Steuersignal zur Stellung und Aktualisierung der Echtzeituhr 43 darf nur dann auf die Echtzeituhr einwirken, wenn gerade keine Aufzeichnung stattfindet, da ansonsten dieses Steuersignal mit aufgezeichnet wärder und bei einer zeitversetzten Wiedergabe der Aufzeichnung die Echtzeituhr fälschlicherweise nachstellen würde. So könnte beispielsweise das Steuersignal die Echtzeituhr 43 an einem Zeitpunkt stellen, an dem vom Sender entweder keine Sendungen angeboten werden (z. B. während der Nacht) oder an einem Zeitpunkt, an dem keine aufzeichnungswürdigen Informationen ausgestrahlt werden. Alternativ hierzu könnte auch durch ein beliebiges, nur bei Recorderwiedergabe vorliegendes Signal der Signalweg des Steuersignals D unterbrochen werden, um eine unerwünschte Nachstellung der Echtzeituhr 43 bei Recorderwiedergabebetrieb unmöglich zu machen.

Das am Ausgang A der Selektionsschaltung 41 anliegende verschlüsselte Bild- und Tonsignal wird d em dritten Umsetzer 42 zugeführt und von diesem immer dann entschlüsselt, wenn von einem Vergleicher 44 ein bestimmtes Steuersignal geliefet wird. Wird das bestimmte Steuersignal nicht geliefert, so wird das verschlüsselte Eingangssignal des dritten Umsetzers 42 entweder gesperrt oder unverändert weitergeleitet. Das Ausgangssignal des dritten Umsetzers 42 wird dem Video/Farbdecoder 5 von Fig. 1 zugeführt, dort in R, G, B-Signale umgewandelt und auf dem Bildschim 6 dargestellt.

Dem Vergleicher 44 von Fig. 2 wird das am Ausgang B der Selektionsschaltung 41 anliegende Signal zugeführt. Dieses enthält eine Information darüber, ob überhaupt ein Zeitvergleich erfolgen soll oder nicht.

Soll kein Zeitvergleich erfolgen, so liefert der Vergleicher 44 stets ein Ausgangssignal, aufgrund dessen der dritte Umsetzer das ihm zugeführte verschlüsselte Bild- und Tonsignal entschlüsselt.

Soll ein Zeitvergleich erfolgen, so vergleicht der Vergleicher 44 die von der Echtzeituhr 43 gelieferte Zeitinformation mit der aus dem Eingangssignal der Selektionsschaltung 41 abgetrennten und an deren Ausgang C zur Verfügung stehenden Zeitinformation, die - sofern sie in verschlüsselter Form übertragen wurde - dem Vergleicher 44 über einen gestrichelt gezeichneten Echtzeitentschlüssler 45 zugeführt wird.

Die Echtzeituhr 43 wird in vorteilhafter Weise von einem Steuersignal gestellt und aktualisiert, welches vom Sender geliefert wurde, im Eingangssignal der Selektionsschaltung 41 enthalten ist und über deren Ausgang D der Echtzeituhr 43 zugeführt wird. Durch diese Maßnahme wird verhindert, daß ein Benutzer durch Manipulationen an der Echtzeituhr 43 in unerlaubter Weise den dritten Umsetzer 42 aktivieren kann. Es muß allerdings - wie bereits oben beschrieben wurde - dafür gesorgt werden, daß dieses Steuersignal entweder nicht mit aufgezeichnet werden kann oder bei Recorderwiedergabe die Echtzeituhr nicht nachstellen kann.

Der Vergleicher 44 liefert immer dann ein den dritten Umsetzer 42 aktivierendes Ausgangssignal, wenn die Differenz zwischen den beiden ihm zugeführten Zeiten innerhalb eines vorgegebenen Zeitintervalles liegt. Die dieses Zeitintervall festlegende Information wird dem Vergleicher durch das am Ausgang B der Selektionsschaltung 41 anliegende Signal zugeführt. Diese Information wird - ebenso wie die anderen an den Ausgängen A bis C der Selektionsschaltung anliegenden Informationen - vom Sender vorgegeben. Dies ist natürlich auch dann der Fall, wenn das Eingangssignal der Selektionsschaltung 41 vom Aufzeichnungsgerät 7 stammt, da in diesem Fall neben der verschlüsselten Bild- und Toninformation auch die an den Ausgängen B und C der Selektionsschaltung 41 anliegenden Signale aufgezeichnet sind.

Dieses vom Sender vorgegebene Zeitintervall kann in vorteilhafter Weise für jede einzelne Sendung unterschiedlich gewählt werden. So kann das vorgegebene Zeitintervall beispielsweise so klein sein, daß die über die Satelliten-Antenne 1 empfangene Sendung zwar unmittelbar während der Sendungszeit entschlüsselt auf dem Bildschirm wiedergegeben werden kann, ein Enschlüsseln einer eventuell angefertigten Aufzeichnung aber nicht möglich ist, da der beim Abspielen der Aufzeichnung vorgenommene Zeitvergleich eine unzulässig große Zeitdifferenz liefert. Ferner kann das vorgegebene Zeitintervall auch einen Tag, eine Woche, oder beliebige weitere Zeitintervalle umfassen. Weiterhin ist es mittels des beschriebenen Systems auch möglich, eine Entschlüsselung in einem beliebigen Zeitraum zu erlauben, welcher beispielsweise erst einen Monat nach dem Sendedatum beginnen kann. Bei dem letztgenannten Beispiel wäre eine unmittelbare Betrachtung am Bildschirm nicht möglich, wohl aber eine entschlüsselte zeitversetzte Wiedergabe eventuell getätigter Aufzeichnungen.

## Patentansprüche

1. System zur Verarbeitung verschlüsselt übertragener Informationen, bei dem der Empfänger mit einer Echtzeituhr ausgerüstet ist und die verschlüsselt übertragenen Informationen nur dann entschlüsselt, wenn die Zeit der Echtzeituhr des Empfängers in einem vorgebbaren Zeitintervall liegt,
**dadurch gekennzeichnet,** daß
- die verschlüsselt übertragenen Informationen ebenfalls eine Echtzeitinformation enthalten, die der Sendezeit der ausgestrahlten Sendung entspricht,
- der Entschlüssler (4) des Empfängers die in der verschlüsselt übertragenen Information enthaltene Echtzeit mit der Zeit der Echtzeituhr (43) des Empfängers vergleicht, und
- die verschlüsselt übertragenen Informationen nur dann entschlüsselt werden, wenn die Differenz der genannten Zeiten innerhalb eines Zeitintervalls liegt, welches vom Sender vorgegeben und zusammen mit den verschlüsselten Informationen übertragen wird.

2. System nach Anspruch 1, **dadurch gekennzeichnet,** daß die in den verschlüsselt übertragenen Informationen enthaltene Echtzeit ebenfalls verschlüsselt übertragen wird und im Entschlüssler (4) entschlüsselt wird.

3. System nach Anspruch 1 oder 2, **dadurch gekennzeichnet,** daß die Echtzeituhr (43) des Entschlüsslers (4) von einem vom Sender herrührenden Signal gestellt und aktualisiert wird.

4. System nach einem der Ansprüche 1 bis 3, **dadurch gekennzeichnet,** daß der Zeitvergleich vom Sender gesteuert optionell erfolgt.

5. System nach einem der vorhergehenden Ansprüche, **dadurch gekennzeichnet,** daß die verschlüsselt übertragenen Informationen Satellitensignale sind.

6. System nach einem der vorhergehenden Ansprüche, **dadurch gekennzeichnet,** daß das vorgebbare Zeitintervall jedem einzelnen Senderbeitrag individuell zugeordnet ist.

7. System nach einem der vorhergehenden Ansprüche, **dadurch gekennzeichnet,** daß die verschlüsselt übertragenen Informationen verschlüsselt auf einem Aufzeichnungsträger aufgezeichnet werden.

8. System nach Anspruch 7, **dadurch gekennzeichnet,** daß das vorgebbare Zeitintervall den Zeitraum bestimmt, in dem eine entschlüsselte Wiedergabe der aufgezeichneten Sendung erlaubt ist.

## Claims

1. System for processing information transmitted in encoded form, in which system the receiver is equipped with a real-time clock and only decodes the information transmitted in encoded form when the time of the real-time clock of the receiver is within a predeterminable time interval, characterised in that
- the information transmitted in encoded form also contains an item of real-time information which corresponds to the transmission time of the broadcast transmission,
- the decoder (4) of the receiver compares the real time contained in the information transmitted in encoded form with the time of the real-time clock (43) of the receiver, and
- the information which is transmitted in encoded form is only decoded if the difference between the aforesaid times is within a time interval which is predetermined by the transmitter and is transmitted together with the encoded information.

2. System according to Claim 1, characterised in that the real time contained in the information transmitted in encoded form is also transmitted in encoded form and decoded in the decoder (4).

3. System according to Claim 1 or 2, characterised in that the real-time clock (43) of the decoder (4) is set and updated by a signal originating from the transmitter.

4. System according to one of Claims 1 to 3, characterised in that the time comparison optionally takes place under the control of the transmitter.

5. System according to one of the preceding claims, characterised in that the items of information which are transmitted in encoded form are satellite signals.

6. System according to one of the preceding claims, characterised in that the predeterminable time interval is individually assigned to each individual transmitter contribution.

7. System according to one of the preceding claims, characterised in that the information transmitted in encoded form is recorded in encoded form on a recording medium.

8. System according to Claim 7, characterised in that the predeterminable time interval determines the time period in which a decoded playback of the recorded transmission is permitted.

## Revendications

1. Système de traitement d'informations transmises sous forme codée, dans lequel le récepteur est équipé d'une horloge de temps réel et les informations transmises sous forme codée sont décodées uniquement lorsque le temps de l'horloge de temps réel du récepteur se situe dans un intervalle de temps pouvant être prédéterminé,
caractérisé en ce que
- les informations transmises sous forme codée contiennent également une information de temps réel, qui correspond à l'émission produite,
- le décodeur (4) du récepteur compare le temps réel contenu dans l'information transmise sous forme codée, au temps de l'horloge de temps réel (43) du récepteur, et
- les informations transmises sous forme codée sont décodées uniquement lorsque la différence desdits temps se situe dans un intervalle de temps qui est prédéterminé par l'émetteur et est transmis conjointement avec les informations codées.

2. Système selon la revendication 1, caractérisé en ce que le temps réel, qui est contenu dans les informations transmises sous forme codée, est également transmis sous forme codée et est décodée dans le décodeur (4).

3. Système selon la revendication 1 ou 2, caractérisé en ce que l'horloge de temps réel (43) du décodeur (4) est réglée et actualisée par un signal émanant de l'émetteur.

4. Système selon l'une des revendications 1 à 3, caractérisé en ce que la comparaison de temps est exécutée de façon optionnelle en étant commandée par l'émetteur.

5. Système selon l'une des revendications précédentes, caractérisé en ce que les informations transmises sous forme codée sont des signaux de satellites.

6. Système selon l'une des revendications précédentes, caractérisé en ce que l'intervalle de temps pouvant être prédéterminé est associé individuellement à chaque émission individuelle envoyée par l'émetteur.

7. Système selon l'une des revendications précédentes, caractérisé en ce que les informations transmises sous forme codée sont enregistrées sous forme codée sur un support d'enregistrement.

8. Système selon la revendication 7, caractérisé en ce que l'intervalle de temps pouvant être prédéterminé détermine la période, pendant laquelle une reproduction décodée de l'émission enregistrée est autorisée.
